# DEMANDE DE BREVET EUROPEEN

(11) **EP 1 988 700 A1**
(43) Date de publication de la demande: **05.11.2008**
(21) Numéro de dépôt: 07290568.0
(22) Date de dépôt: 04.05.2007
(51) Int. Cl.: H04M 17/00, H04L 12/14, H04L 12/58

(54) **Procedé de prépaiement pour de services tel que push mail**

(71) Demandeur: Alcatel Lucent, 75008 Paris (FR)
(72) Inventeur: Toure, Famory, 78141 Velizy (FR); Bourgeois, Thomas, 78141 Velizy (FR); Papini, Hélène, 78141 Velizy (FR); Reynes, François, 78141 Velizy (FR); Leprince, Marc, 78141 Velizy (FR); Huguet, William, 78141 Velizy (FR); Ganne, Gilles, 78141 Velizy (FR)
(74) Mandataire: Demulsant, Xavier

(57) **Abrégé**

Procédé permettant à un terminal de communication mobile appartenant au réseau d'un opérateur d'accéder à un service tel que push mail, ce procédé étant caractérisé en ce qu'il comprend une étape de création d'une première connexion privée permanente entre une plateforme et le réseau de l'opérateur, cette plateforme comprenant une base de données des utilisateurs de services en prépaiement et un serveur d'affectation dynamique d'adresses IP, le procédé comprenant en outre :
- une étape de réception d'une requête du terminal de communication mobile,
- une étape d'identification de ce terminal et du service requis par ce terminal,
- une étape d'interrogation de la base de données utilisateurs afin de déterminer si le terminal identifié bénéficie du prépaiement pour le service requis,
- une étape de décompte du crédit de l'utilisateur du terminal pour le service prépayé requis.

## Description

L'invention concerne les télécommunications.

Les utilisateurs de certains terminaux de communication mobile bénéficient depuis quelques années d'un service de messagerie « push mail ». Ce service permet de recevoir, avec l'objet du message électronique, les premières lignes du texte du message.

La facturation des services « push mail » est réalisée après coup.

Un procédé d'accès prépayé et anonyme à Internet est proposé dans le document FR2817056, ce procédé permettant de réaliser des achats sur Internet ou de consulter des sites payant en réalisant un débit du temps de connexion prépayé correspondant au montant de l'achat ou de la consultation sur le site payant. Le procédé décrit dans le document FR2817056 présente l'inconvénient de nécessiter l'installation préalable d'un logiciel sur l'ordinateur.

Le document WO 2007/001231 décrit un réseau 3GPP comprenant un serveur AAA permettant le contrôle en temps réel du crédit restant pour l'accès à un service prépayé.

L'invention vise à fournir un procédé efficace de taxation de services tels que push mail pour des opérateurs dits « Greenfield » n'ayant pas toute l'infrastructure propriétaire et nécessaire à l'acheminement des messages, ce procédé ne nécessitant pas de modification des terminaux de communication et étant convivial pour les utilisateurs.
A ces fins, l'invention se rapporte, selon un premier aspect, à un procédé permettant à un terminal de communication mobile appartenant au réseau d'un opérateur d'accéder à un service tel que push mail, ce procédé comprenant une étape de création d'une première connexion privée permanente entre une plateforme et le réseau de l'opérateur, et une étape de création d'une deuxième connexion privée permanente, entre la plateforme et le centre opérateur réseau.
cette plateforme comprenant une base de données des utilisateurs de services en prépaiement, le procédé comprenant en outre :
- une étape de réception d'une requête du terminal de communication mobile,
- une étape d'identification de ce terminal et du service requis par ce terminal,
- une étape d'interrogation de la base de données utilisateurs afin de déterminer si le terminal identifié bénéficie du prépaiement pour le service requis,
- une étape de décompte du crédit de l'utilisateur du terminal pour le service prépayé requis.

L'invention se rapporte, selon un deuxième aspect, à un procédé permettant à un terminal de communication mobile appartenant au réseau d'un opérateur d'accéder à un service tel que push mail, ce procédé comprenant une étape de création d'une première connexion privée permanente entre une plateforme et le réseau de l'opérateur, et une étape de création d'une deuxième connexion privée permanente, cette plateforme comprenant une base de données des utilisateurs de services en prépaiement et un serveur d'affectation dynamique d'adresses IP, le procédé comprenant en outre :
- une étape de réception d'une requête du terminal de communication mobile,
- une étape d'identification de ce terminal et du service requis par ce terminal,
- une étape d'interrogation de la base de données utilisateurs afin de déterminer si le terminal identifié bénéficie du prépaiement pour le service requis,
- une étape de décompte du crédit de l'utilisateur du terminal pour le service prépayé requis.

Avantageusement, le serveur d'affectation dynamique des adresses IP est un serveur d'authentification, d'autorisation et de comptabilité.

Avantageusement, le serveur d'affectation dynamique des adresses IP met en oeuvre les protocoles DHCP et RADIUS.

Le procédé comprend avantageusement un décompte du crédit utilisateur jusqu'à une valeur minimum seuil prédéterminée, un message étant envoyé au terminal utilisateur lorsque cette valeur seuil est atteinte, ce message informant l'utilisateur de ce que la valeur seuil est atteinte et proposant un réapprovisionnement de compte.

D'autres objets et avantages de l'invention apparaîtront à la lumière de la description faite ci-après en référence aux dessins annexés dans lesquels :
- la figure 1 est un diagramme illustrant une première mise en oeuvre de l'invention ;
- la figure 2 est un diagramme illustrant une deuxième mise en oeuvre de l'invention ;

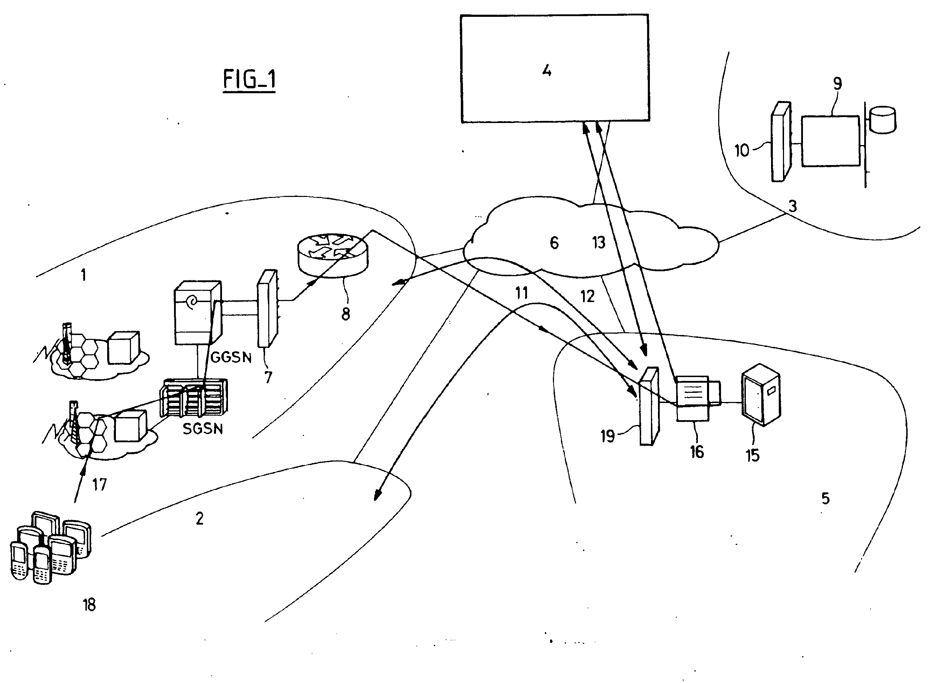

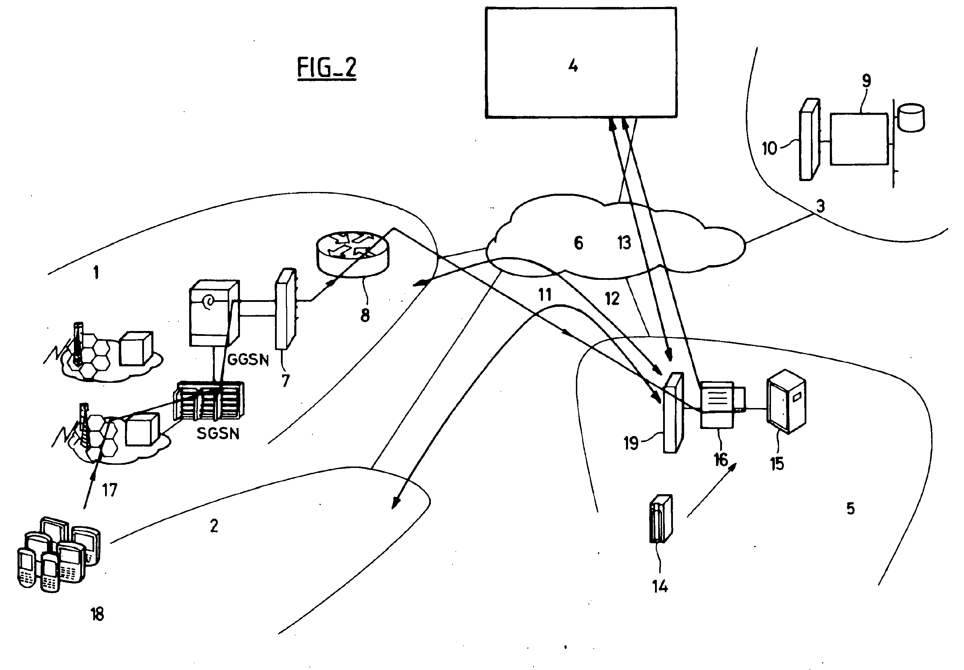

Sur les figures 1 et 2 sont schématisés deux réseaux opérateurs 1, 2, un réseau privé d'entreprise 3, un centre opérateur réseau 4 et une plateforme 5. Chacun des réseaux 1-3, le centre 4 et la plateforme 5 sont connectés à un réseau de communication 6, notamment le réseau Internet.

Seule la structure d'un des réseaux opérateurs est représentée plus en détail, afin de simplification. Par exemple, ce réseau 1 est de type GPRS *(General Packet Radio Service)* et comprend, de manière connue en soi, un routeur SGSN *(Serving GPRS Support Node)* et une passerelle GGSN *(Gateway GPRS Support Node).* Un pare feu 7 est placé entre la passerelle CGSN et un concentrateur de réseau privé virtuel 8.

Le réseau d'entreprise comprend, de manière connue en soi également, un serveur 9 et un pare feu 10.

La plateforme 5 est reliée à chaque réseau opérateur 1, 2, par un tunnel 11, 12. Par tunnel, on désigne ici une liaison virtuelle point à point permettant la création d'un réseau privé virtuel VPN. Un paquet fonctionnant sous un protocole de tunnelisation est encapsulé pour être placé dans un paquet IP, ce paquet étant ensuite transmis au moyen du protocole UDP.

La plateforme 5 est également connectée au centre opérateur réseau 4 par un tunnel 13.

Sur la figure 2, la plateforme 5 comprend également un serveur 14 d'affectation dynamique des adresses IP. Dans une mise en oeuvre, ce serveur 14 est un serveur d'authentification, d'autorisation et de comptabilité AAA *(Authentification Autorisation Accounting).* Avantageusement, le serveur d'affectation dynamique des adresses IP met en oeuvre les protocoles DHCP et RADIUS.

Une base de données 15 contient les informations relatives aux abonnés aux services prépayés tels que push mail. L'accès à cette base de données 15 est par exemple obtenu par la technologie JDBC *(Java DataBase Connectivity),* cette interface de programmation permettant de se connecter à toute base de données en employant la même syntaxe.

Les tunnels VPN 11,12 et 13 pour échanger les données peuvent être créés sous la forme d'une infrastructure à clé publique ou d'une liaison dite louée (leased line).

Une infrastructure à clé publique permet d'assurer une sécurité optimale pour les données échangées dans les tunnels VPN 11-13.

Une liaison louée permet d'assurer une sécurité plus importante puisque cette liaison est allouée pour échanger uniquement les données entre les réseaux de l'opérateur1,2 et le réseau privé 3.

Le flux des données de service prépayé est représenté par la flèche 17. Ce flux partant de terminaux de communication mobile 18 passe du réseau 1 à la plateforme 5 via le tunnel VPN 12.

La protection des données est encore renforcée par un pare feu 19 en entrée ou en sortie de la plateforme 5.

Dans le cas d'une liaison louée les données transitent en plus des éléments précités par un routeur situé à l'arrivée des tunnels VPN dans la plateforme 5.

Le flux de données passe de la plateforme 5 au centre opérateur de réseau 4 par le tunnel 13.

Un comptage des flux de données de service sortant de la plateforme est effectué par un dispositif de comptage des flux de données 16 dénommé *charging proxy*. Lorsque ce flux atteint une valeur prédéterminée, un message est adressé vers le terminal de communication 18, proposant de réapprovisionner le compte.

Ensuite, si le compte n'est pas approvisionné, le dispositif de comptage des flux de données 16 bloque le trafic des données.

Le routage des données de services non prépayés est effectué à la source, de sorte que ces données n'encombrent pas la plateforme 5.

## Revendications

1. Procédé permettant à un terminal de communication mobile appartenant au réseau d'un opérateur d'accéder à un service tel que push mail, ce procédé étant **caractérisé en ce qu'**il comprend une étape de création d'une première connexion privée permanente entre une plateforme et le réseau de l'opérateur et une étape de création d'une deuxième connexion privée permanente, entre la plateforme et un centre opérateur réseau, cette plateforme comprenant une base de données des utilisateurs de services en prépaiement, le procédé comprenant en outre:
- une étape de réception d'une requête du terminal de communication mobile,
- une étape d'identification de ce terminal et du service requis par ce terminal,
- une étape d'interrogation de la base de données utilisateurs afin de déterminer si le terminal identifié bénéficie du prépaiement pour le service requis,
- une étape de décompte du crédit de l'utilisateur du terminal pour le service prépayé requis.

2. Procédé permettant à un terminal de communication mobile appartenant au réseau d'un opérateur d'accéder à un service tel que push mail, ce procédé étant **caractérisé en ce qu'**il comprend une étape de création d'une première connexion privée permanente entre une plateforme et le réseau de l'opérateur et une étape de création d'une deuxième connexion privée permanente, entre la plateforme et un centre opérateur réseau, cette plateforme comprenant une base de données des utilisateurs de services en prépaiement et un serveur d'affectation dynamique d'adresses IP, le procédé comprenant en outre :
- une étape de réception d'une requête du terminal de communication mobile,
- une étape d'identification de ce terminal et du service requis par ce terminal,
- une étape d'interrogation de la base de données utilisateurs afin de déterminer si le terminal identifié bénéficie du prépaiement pour le service requis,
- une étape de décompte du crédit de l'utilisateur du terminal pour le service prépayé requis.

3. Procédé selon la revendication 2, **caractérisé en ce que** le serveur d'affectation dynamique des adresses IP est un serveur d'authentification, d'autorisation et de comptabilité.

4. Procédé selon la revendication 3, **caractérisé en ce que** le serveur d'affectation dynamique des adresses IP met en oeuvre les protocoles DHCP et RADIUS.

5. Procédé selon les revendications 1 à 4, **caractérisé en ce que** le décompte du crédit utilisateur est effectué jusqu'à une valeur minimum seuil prédéterminée, un message étant envoyé au terminal utilisateur lorsque cette valeur seuil est atteinte, ce message informant l'utilisateur de ce que la valeur seuil est atteinte et proposant un réapprovisionnement de compte.
